# EUROPÄISCHE PATENTSCHRIFT

(11) **EP 0 381 126 B1**
(45) Veröffentlichungstag und Bekanntmachung des Hinweises auf die Patenterteilung: **04.08.1993**
(21) Anmeldenummer: 90101771.5
(22) Anmeldetag: 30.01.1990
(51) Int. Cl.: B65G 17/42, B08B 9/42, B67C 3/24

(54) **Vorrichtung zum Transport von Gütern**
Transport device for products
Dispositif de transport pour marchandises

(30) Priorität: 02.02.1989 DE 3903104
(43) Veröffentlichungstag der Anmeldung: 08.08.1990
(73) Patentinhaber: Silberzahn, Helmut, D-74821 Mosbach (DE)
(72) Erfinder: Silberzahn, Helmut, D-74821 Mosbach (DE)
(74) Vertreter: Linser, Heinz

(56) Entgegenhaltungen:
- DE-A- 2 314 794
- DE-C- 1 041 862
- FR-A- 1 236 775
- FR-A- 1 277 107
- FR-A- 2 167 340
- GB-A- 1 519 444
- US-A- 4 423 745

## Beschreibung

Die Erfindung betrifft eine Vorrichtung zum Transport von Flaschen, Behältern oder ähnlichen Gütern durch eine Bearbeitungsmaschine, vorzugsweise durch eine Flaschenreinigungsmaschine, mit einer Eingangs- und einer Ausgangsstation, bestehend aus zwei zueinander parallel laufenden endlosen Gelenkketten, an denen Führungs- und Halteelemente befestigt sind und welche in der Bearbeitungsmaschine mittels Antriebs- und Umlenkrädern angetrieben und geführt werden, wobei jedes Kettenglied zwei parallel angeordnete Hohlzylinder, Rollen oder Hülsen aufweist, welche an einem Ende jeweils durch ein flächenförmiges Verbindungselement miteinander verbunden und gehalten sind, und durch jeden Hohlzylinder eine Achse geführt ist, welche an ihren Enden jeweils mit einer Führungs- oder Halteplatte verbunden ist.

Eine Flaschenreinigungsmaschine ist vorzugsweise mit einer Vorrichtung zum Transport von Flaschen der oben ausgeführten Art ausgerüstet. Derartige Maschinen, beispielsweise auch Gläserspülmaschinen arbeiten vollautomatisch und sind robuste, kompakte Hochleistungsmaschinen zum Reinigen und Spülen von Einwegflaschen und -gläsern bevor diese einer Befüllungsstation zugeführt werden. Maschinen dieser Art werden auch als Rinser bezeichnet und bestehen aus rostgeschützten Materialien, sind dauerhaft gebaut und leicht zu unterhalten.

Während des ganzen Arbeitsablaufes, wie beispielsweise Spülen und Austropfen, wird jede Flasche von der Transportvorrichtung fest gehalten und geführt, und wird während des Arbeitsvorganges um 180° geschwenkt, so daß ein einwandfreies Auslaufen des Spülwassers erreicht wird.

Es sind bereits Rinser und ähnliche Bearbeitungsmaschinen bekannt, die einreihig zugeführte Behälter oder Flaschen sicher übernehmen und ohne Beschädigung transportieren.

Das Prinzip beruht auf zwei synchron laufenden, kurvengängigen Kettenbahnen. Die Kettenglieder sind mit speziell geformten, widerstandsfähigen synthetischen Gummiprofilen ausgerüstet. Die Elastizität der Profile erlaubt ein problemloses und schonendes Fördern von Flaschen unterschiedlichster Formen. In der Bearbeitungsmaschine werden die zwei Flaschen-Mitnehmerketten über teleskopartige Kardanwellen synchron angetrieben, welche mit dem Motor durch eine Antriebskette verbunden sind. Die teleskopartigen Kardanwellen gestatten zwar einen großen Verstellbereich, jedoch mit einem erhebliche Aufwand.

Die Zuführung und Abführung der Flaschen erfolgt bei den genannten Maschinen seitlich zur Förderebene. Dies bedingt eine entsprechende Ausbildung der Kettenglieder, um eine ausreichende Abwinkelung aus der Laufbahn der Ketten zu erreichen. Die hierfür verwendeten Glieder- oder Hülsenketten sind im Prinzip nur in der Lage in der Ebene senkrecht zu den Achsen ihrer Hülsen Kurvenbahnen einzunehmen. Sollen die Kettenglieder aus ihrer Laufebene herausgeführt werden, so sind besondere Maßnahmen erforderlich.

Die bekannten hierfür verwendeten Kettenglieder sind an den durch die Hülsen der Kettenglieder geführten Achsen mit einem U-förmigen Blech befestigt, an dessen einem Schenkel synthetische Gummiprofile oder ein weiteres Halteblech zur Aufnahme der Gummiprofile befestigt sind. Die Achsen der Kettenglieder laufen daher parallel zu den Achsen beispielsweise der zu haltenden Flaschen. In der Ebene dieser Achsen lassen sich auch relativ enge Kurvenbahnen erreichen, jedoch nicht mehr in einer Ebene unter einem Winkel zu diesen Achsen. Um dies zu erreichen, beispielsweise um Höhenunterschiede vom unteren zum oberen Trum zu überwinden, erhalten die Kettenglieder ein ausreichendes Spiel.

Die Umlenkung, welche parallel zu den Achsen der Kettenglieder erfolgen muß, wird durch Vielecke mit einem relativ groben Durchmesser durchgeführt, welche in die U-förmigen Bleche eingreifen, die an den Kettengliedern befestigt sind. Um die Kettenumlenkung auch über einen relativ großen Durchmesser zu erreichen, ist es erforderlich, ein sehr grobes Spiel zwischen den Kettengliedern zuzulassen. Tritt durch den Bruch einer Flasche oder durch andere Effekte ein Stau auf, so wird die Kette auf der einen Seite des Staus gezogen und auf der anderen geschoben, so daß an dieser Stelle die Glieder sehr schnell auf- und querschieben und beim Wiederanzug des Antriebs besteht die Gefahr, daß die Kette bricht bzw. reißt.

Um diese Gefahr zu vermeiden, werden aufwendige Maßnahmen getroffen, beispielsweise mit Hilfe von Rutschkupplungen und pneumatischen Zylindern.

Da die in solchen Fällen auftretenden Kräfte sehr unterschiedlich sind, lassen sich trotz dieser Maßnahmen Kettenbrüche nicht vermeiden.

Aus der DE-C-1 041 862 ist ein Einzelflaschenförderer mit Höhenförderband gemäß dem Oberbegriff des Anspruchs 1 bekannt. Dieser besteht aus zwei miteinander verbundenen Kettensträngen, wobei die Verbindungselemente jeweils ein Lager zur Aufnahme einer Flasche bilden. Der Flaschentransport kann hierbei nur in liegender Position der Flasche erfolgen und eine Schwenkbewegung um 180° oder 360° ist nicht möglich. Eine solche Vorrichtung eignet sich daher nur zur Überwindung von Höhenunterschieden.

Der Erfindung liegt daher die Aufgabe zugrunde, Maßnahmen vorzuschlagen, um Kettenbrüche bei den genannten Anlagen zu vermeiden und die Ketten selbst in ihrem Aufbau erheblich zu vereinfachen und ferner die Spannweite der Ketten und damit die Größe der Bearbeitungsmaschine ohne besondere Aufwendungen zu vergröbern. Die Transportvorrichtung soll das zu transportierende Gut in einfacher Weise aufnehmen und abgeben und soll in der Lage sein, das Gut während des Transportes um mindestens 180° schwenken zu können.

Die Lösung dieser Aufgabe besteht nach der Erfindung darin, daß bei der eingangs aufgeführten Vorrichtung die durch die Hohlzylinder der Kette geführten Achsen an beiden Enden jeweils paarweise mit einer Führungs- oder Halteplatte verbunden sind und das elastische Material als ein endloses Profilband ausgebildet ist, welches mit den Halteplatten derartig verbunden ist, daß zwischen den Platten eine Schlaufe gebildet ist, und die elastischen Profilbänder an den zueinander parallel angeordneten endlosen Gelenkketten einander zugewandt sind, wobei die sich gegenüberstehenden Schlaufen aus elastischem Kunststoffmaterial für die zu transportierenden Elemente, insbesondere Flaschen, jeweils eine elastische, greif- und rutschfeste Umschließung und Halterung bilden, so daß ein Über-Kopf-Transport möglich ist.

Hierdurch ergibt sich nach der Erfindung die Möglichkeit, die Umlenkräder in der Bearbeitungsmaschine vom unteren zum oberen Trum und umgekehrt als Zahnräder auszubilden, da nunmehr die Achsen der Kettenglieder im rechten Winkel zur Fläche der Umlenkräder angeordnet sind. Aus dieser Anordnung ergibt sich der weitere Vorteil, daß der Kettenvor- und Rücklauf in einer vertikalen Ebene liegt, so daß die Bearbeitungsmaschine kompakter und damit platzsparender ausgeführt werden kann.

Die durch die Hohlzylinder mit Spiel geführten Achsen sind jeweils an einem Ende mit der ihr zugeordneten Halteplatte starr befestigt, beispielsweise verpreßt. An ihrem anderen Ende sind die Achsen jeweils durch eine Bohrung der Halteplatte geführt und mittels einer Feder gesichert.

Die Erfindung wird anhand der Zeichnung, in der ein Ausführungsbeispiel dargestellt ist näher erläutert. Hierbei zeigen:
- FIGUR 1: eine schematische Seitenansicht einer Flaschenbearbeitungsmaschine mit einer integrierten Transportvorrichtung in Seitenansicht;
- FIGUR 2: die Darstellung nach Figur 1 im Querschnitt;
- FIGUR 3: die Darstellung nach Figur 1 in Draufsicht;
- FIGUR 4: eine vergrößerte Darstellung eines Kettengliedes in Draufsicht und
- FIGUR 5: die Darstellung nach Figur 4 in Seitenansicht.

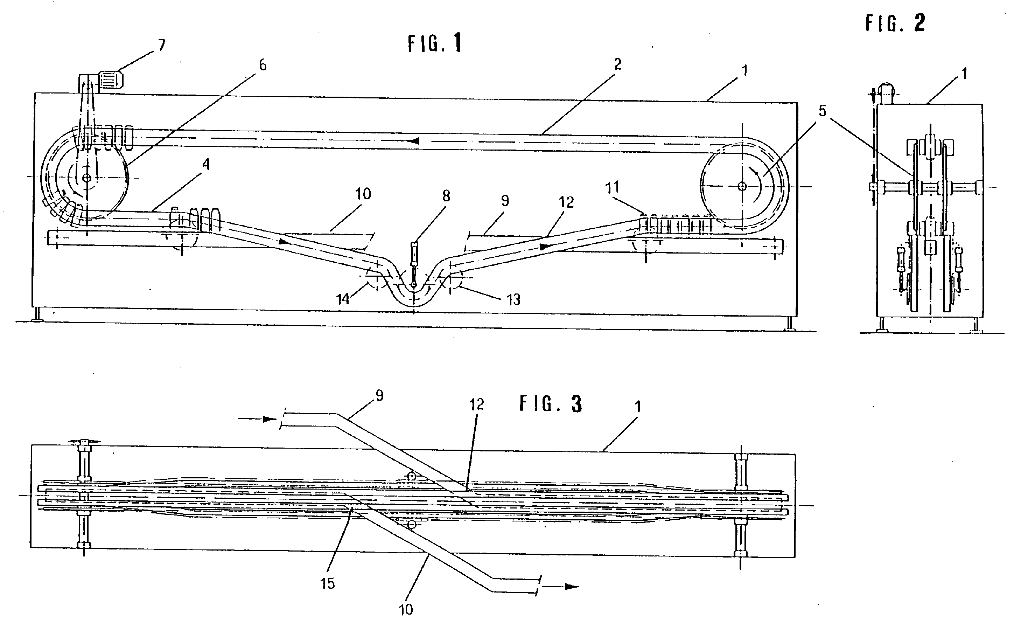

In den Figuren 1 bis 3, auf die hier Bezug genommen wird, ist eine Flaschenwaschanlage 1 dargestellt, in der sich die Vorrichtung zum Transport der Flaschen befindet. Diese besteht aus einem oberen Trum 2 und einem unteren Trum 4. Die Umlenkräder 5 und 6 sind als Zahnräder ausgebildet, wobei das Zahnrad 6 von einem Motor 7 angetrieben wird. Im unteren Trum 4 ist ein pneumatischer Kettenspanner 8 angeordnet. Dieser Kettenspanner bewirkt nicht nur eine elastische Spannung der gesamten Ketten, sondern auch eine Absenkung des unteren Trum 4. Hierdurch ist es in vorteilhafter Weise möglich, die Zuführung 9 und Übergabe der Flaschen 11 von einem ebenen Scharnierplatten-Bandförderer an den Kettenförderer an der Schnittstelle 12 durchzuführen. Selbstverständlich lassen sich auch mehrere Kettenspanner 8 im Zusammenwirken mit Umlenkzahnrädern 13 und 14 durchführen, je nach den zu erwartenden geometrischen und energetischen Bedingungen, einsetzen. Dadurch kann der Neigungswinkel des Trum bestimmt werden.

In entsprechender Weise erfolgt die Abgabe der gereinigten Flaschen 11 aus der Vorrichtung an der Schnittstelle 15 des Kettenförderers an einen ebenen Scharnierplatten-Bandförderer 10. Die Schnitt- bzw. Übergangsstellen 12 und 15 befinden sich in der vertikalen Ebene der Flaschenwaschanlage 1.

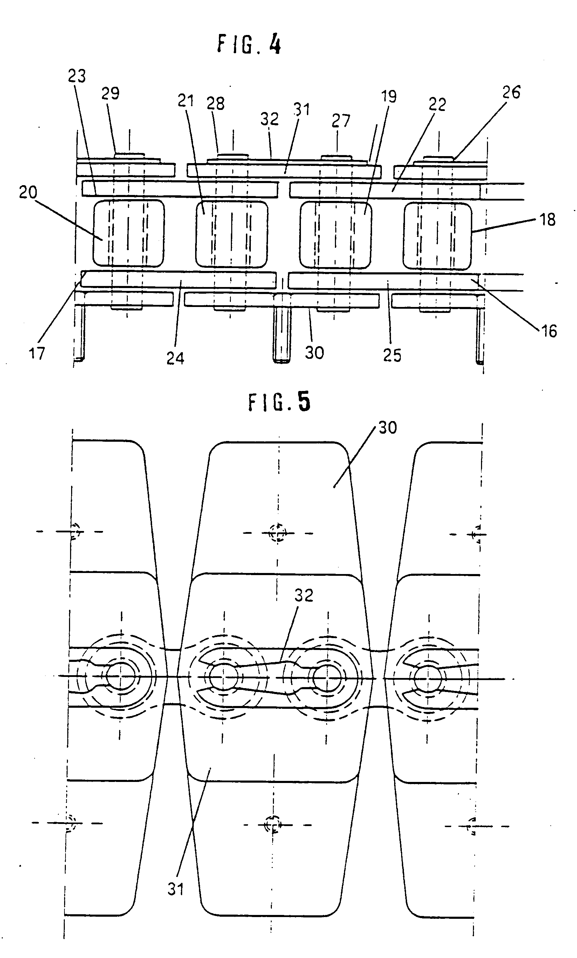

Diese Bauweise und die damit erzielten Vorteile werden durch die Kettenglieder erzielt, welche in den Figuren 4 und 5 wiedergegeben sind.

In den Figuren 4 und 5 sind jeweils zwei Kettenglieder 16 und 17 dargestellt, wobei jedes Kettenglied zwei parallel angeordnete Hohlzylinder oder Rollen 18, 19 und 20, 21 aufweist, welche an ihren Enden jeweils durch ein flächenförmiges Verbindungselement 22 und 23 sowie 24 und 25 auf der gegenüberliegenden Seite miteinander verbunden und gehalten sind. Durch jeden Hohlzylinder 18, 19, 20 und 21 ist eine Achse 26, 27, 28 und 29 geführt, welche an ihren Enden jeweils mit einer Fürungs- oder Halteplatte 30 und 31 verbunden ist.

Zwei Zylinderachsen 27 und 28 von zwei benachbart angeordneten Kettengliedern 16 und 17 sind an jedem Achsende mit der Führungs- oder Halteplatte 30 und 31 befestigt, wobei die Achsen der Zylinder senkrecht auf den als ebene Flächen ausgebildeten Führungs- oder Halteplatten 30 und 31 stehen.

Die Kettenglieder 16 und 17 sind zu den Führungs- und Halteplatten schwenkbar ausgebildet.

Die sich gegenüberliegend angeordneten Führungs- und Halteplatten 30 und 31 weisen eine unterschiedliche Flächengröße auf. Die durch die Hohlzylinder 18 bis 21 geführten Achsen 26 bis 29 sind an einem Ende mit der jeweiligen Halteplatte verpreßt und an ihrem anderen Ende jeweils durch eine Bohrung der Halteplatte geführt und mittels einer Feder 32 gesichert.

Die mit jeweils zwei Kettengliedern verbundenen Halteplatten 30 sind an der der Kette abgewandten Seite mit einem Profil aus elastischem Kunststoffmaterial ausgebildet, welches in der Zeichnung nicht näher dargestellt ist. Das elastische Material ist als ein endloses Profilband ausgebildet, welches mit den Halteplatten 30 derartig verbunden ist, daß zwischen den Platten eine Schlaufe gebildet ist.

Mit Hilfe der Federn 32 kann die Kette an jeder Stelle geöffnet werden, so daß einzelne Glieder in einfacher Weise austauschbar sind.

Mit dem Aufbau der Vorrichtung nach der Erfindung sind die einzelnen Kettenglieder wesentlich einfacher und materialsparend aufgebaut. In der Bewegungsebene der Ketten lassen sich die Führungs-und Antriebsräder anordnen, wobei die Führungsräder gegen einen Rückwärtslauf gesichert werden können. Damit ist bei einer Blockierung der Kette durch zerstörte Flaschen kein Auflaufen und damit Brechen der Kette bei einer plötzlichen Entlastung mehr möglich.

## Patentansprüche

1. Vorrichtung zum Transport von Flaschen, Behältern oder ähnlichen Gütern durch eine Bearbeitungsmaschine, vorzugsweise durch eine Flaschenreinigungsmaschine (1), mit einer Eingangs- und einer Ausgangsstation (9 bzw. 11), bestehend aus zwei zueinander parallel laufenden endlosen Gelenkketten, an denen Führungs- und Halteelemente befestigt sind, welche in der Bearbeitungsmaschine mittels Antriebs- und Umlenkrädern (6 bzw. 5) angetrieben und geführt werden, wobei jedes Kettenglied zwei parallel angeordnete Hohlzylinder, Rollen oder Hülsen (18 - 21) aufweist, die an ihren Enden jeweils durch ein flächenförmiges Verbindungselement (16,17; 22,23) miteinander verbunden und gehalten sind, und durch jeden Hohlzylinder eine Achse geführt ist, welche an einem Ende jeweils mit einer Führungs- oder Halteplatte (30, 31) verbunden ist, wobei jeweils zwei Zylinderachsen (27, 28) von zwei benachbart angeordneten Kettengliedern (16,17) einer Kette an einem Achsende die zu den Kettengliedern schwenkbare Führungs- oder Halteplatte (30, 31) aufweisen und die Achsen der Zylinder senkrecht auf den als ebene Flächen ausgebildeten Führungs- oder Halteplatten (30,31) stehen und die Halteplatten (30) an der auf einer den Kettengliedern (16, 17) abgewandten Seite mit einem Profil aus elastischem kunststoffmaterial versehen sind, dadurch gekennzeichnet, daß
a) die durch die Hohlzylinder (19) der Kette geführten Achsen (27 bis 29) an beiden Enden jeweils paarweise mit einer Führungs- oder Halteplatte (30,31) verbunden sind,
b) das elastische Material als ein endloses Profil an ausgebildet ist, welches mit den Halteplatten (30) derartig verbunden ist, daß zwischen den Platten eine Schlaufe gebildet ist, und
c) die elastischen Profilbänder an den zueinander parallel angeordneten endlosen Gelenkketten einander zugewandt sind, wobei die sich gegenüberstehenden Schlaufen aus elastischem kunststoffmaterial für die zu transportierenden Elemente, insbesondere Flaschen, jeweils eine elastische, greif- und rutschfeste Umschließung und Halterung bilden, so daß ein Über-Kopf-Transport möglich ist.

2. Vorrichtung nach Anspruch 1, **dadurch gekennzeichnet**, daß zwischen den Achsen der Glieder der Kette und den Führungs- und Halteplatten (22 bis 25) ein ausreichendes Spiel vorhanden ist.

3. Vorrichtung nach Anspruch 1 oder 2, **dadurch gekennzeichnet**, daß die durch die Hohlzylinder (18 bis 21) mit Spiel geführten Achsen jeweils an einem Ende mit der ihr zugeordneten Halteplatte (30,31) starr befestigt sind.

4. Vorrichtung nach Anspruch 1 oder einem der voranstehenden Ansprüche, **dadurch gekennzeichnet**, daß die durch die Hohlzylinder (18 bis 21) geführten Achsen an einem Ende mit der jeweiligen Halteplatte (30) verpreßt sind.

5. Vorrichtung nach Anspruch 1 oder einem der voranstehenden Ansprüche, **dadurch gekennzeichnet,** daß die Gliederkettenführung in der Vorrichtung ein oberes und ein unteres Kettentrum aus jeweils zwei parallel laufenden Ketten bildet, wobei jede Kette mindestens ein Antriebs-und ein Umlenkzahnrad (5,6) aufweist.

6. Vorrichtung nach Anspruch 1 oder einem der voranstehenden Ansprüche, **dadurch gekennzeichnet**, daß das obere Trum (2) des Gliederkettenpaares eine Führung und Abstützung aufweist.

7. Vorrichtung nach Anspruch 1 oder einem der voranstehenden Ansprüche, **dadurch gekennzeichnet**, daß die Führung und Abstützung des oberen Trum als Nut in einem Tragbalken oder als Zahnräder ausgebildet ist bzw. sind.

8. Vorrichtung nach Anspruch 1 oder einem der voranstehenden Ansprüche, **dadurch gekennzeichnet**, daß das untere Trum (4) der Kettenführung durch mindestens einen Kettenspanner (8) aus der horizontalen Laufebene nach unten oder oben herausgeführt ist und die Zuführungs- und Ausgangsstation (9, 10) in der Schnittlinie (12,15) der schiefen Ebene des unteren Kettentrums mit je einer ebenen Transportvorrichtung ausgebildet ist.

## Claims

1. Mechanism for transporting bottles, containers, or similar goods through a processing machine, preferably through a bottle-cleaning machine (1), with an entrance station and an exit station (9 or 11), consisting of two continuous articulated chains running parallel to each other, to which guiding and holding components are fixed, which in the processing machine are driven and conveyed by means of driving and guiding wheels (6 or 5), wherein each link of a chain has two parallel hollow cylinders, rollers, or sleeves (18-21), which are connected to each other and held together at their ends by a flat link element (16, 17; 22, 23); and through each hollow cylinder an axle is passed, which is connected at one end to a guiding or holding plate (30, 31), whereby two cylinder axles (27, 28) of two adjacent links (16, 17) of a chain have the guiding or holding plate (30, 31) at one axle end, said plate being pivotal in relation to the chain links; and the axles of the cylinders stand normal to the flat surfaces of the guiding or holding plates (30, 31), and the holding plates (30) are provided with a section of synthetic elastic material at one side of the chain links (16, 17), characterised in that
a) the axles (27 to 29) passing through the hollow cylinders (19) of the chain are connected at both ends and in pairs to a guiding or holding plate (30, 31),
b) the elastic material is constituted as an endless profiled belt which is connected to the holding plates (30) such that a loop is formed along the plates, and
c) the elastic profiled belts on the parallel continuous articulated chains face towards each other, whereby the mutually facing loops of synthetic elastic material for the items to be transported, especially bottles, form an elastic, tightly gripping, and non-slip surrounding and holding means, so that overhead transportation is possible.

2. Mechanism according to Claim 1, characterised in that there is considerable play between the axles of the chain links and the guiding and holding plates (22 to 25).

3. Mechanism according to Claim 1 or 2, characterised in that the axles which are passed with tolerance through the hollow cylinders (18 to 21) are firmly fixed at one end to their corresponding holding plates (30, 31).

4. Mechanism according to Claim 1 or one of the preceding Claims, characterised in that the axles which are passed through the hollow cylinders (18 to 21) are at one end integrally moulded with their respective holding plates (30).

5. Mechanism according to Claim 1 or one of the preceding Claims, characterised in that the link chain conveyor assembly in the mechanism consists of an upper and a lower chain run formed of two chains running parallel to each other, in which each chain has at least one wheel for driving and one wheel for guiding (5, 6).

6. Mechanism according to Claim 1 or one of the preceding Claims, characterised in that the upper run (2) of the pair of link chains has a guide and support.

7. Mechanism according to Claim 1 or one of the preceding Claims, characterised in that the guide and support of the upper run is constituted by a track in a beam or by sprocket wheels.

8. Mechanism according to Claim 1 or one of the preceding Claims, characterised in that the lower run (4) of the chain assembly is displaced downwards or upwards out of the horizontal plane of operation by at least one chain adjuster (8) and the supply station and exit station (9, 10) is provided with a flat transporting mechanism obliquely intersecting (12, 15) the lower chain run.

## Revendications

1. Dispositif de transport de bouteilles, récipients ou produits similaires dans une machine de traitement, de préférence une machine de nettoyage de bouteilles (1) avec un poste d'entrée et un poste de sortie (9 respectivement 11), constitués de deux chaînes articulées sans fin, mutuellement parallèles, auxquelles sont fixés des éléments de guidage et de retenue, entraînées et guidées dans la machine de traitement par des pignons menant et de renvoi (6 respectivement 5), tandis que chaque maillon présente deux cylindres creux, rouleaux ou manchons (18-21) disposés parallèlement, maintenus et reliés chaque fois l'un à l'autre à leurs extrémités par un élément de liaison plan (16,17; 22,23), et que chaque cylindre creux est traversé par un axe qui, à une extrémité, est chaque fois relié à une plaque de guidage ou de retenue (30,31), deux axes de cylindre (27,28) de deux maillons adjacents (16, 17) d'une chaîne présentant chaque fois à une extrémité d'axe les plaques de guidage ou de retenue (30,31) pivotantes par rapport aux maillons, et les axes des cylindres étant disposés perpendiculairement par rapport aux plaques de guidage ou de retenue (30,31) réalisées sous forme de surfaces planes, et les plaques de retenue (30) sur du côté opposé aux maillons (16,17) étant pourvues d'un profilé en une matière plastique élastique, caractérisé en ce que
a) les axes (27 à 29) traversant les cylindres creux (19) de la chaîne sont reliés aux deux extrémités, chaque fois par paire, à une plaque de guidage ou de retenue (30,31),
b) le matériau élastique est réalisé sous forme d'une bande profilée sans fin, reliée aux plaques de retenue (30) de façon à former une boucle entre les plaques, et
c) les bandes profilées élastiques sur les chaînes articulées, sans fin, parallèles sont tournées l'une vers l'autre, tandis que les boucles en matière plastique élastique, disposées face à face, forment chaque fois, pour les éléments à transporter, en particulier des bouteilles, un support et une ceinture élastique assurant une prise solide et sans glissement, de sorte qu'un transport tête en bas est possible.

2. Dispositif suivant la revendication 1, caractérisé en ce qu'un jeu suffisant est prévu entre les axes des maillons de la chaîne et les plaques de guidage et de retenue (22 à 25).

3. Dispositif suivant la revendication 1 ou 2, caractérisé en ce que les axes traversant avec jeu les cylindres creux (18 à 21) sont chaque fois fixés rigidement à une extrémité, à la plaque de retenue (30, 31) qui leur correspond.

4. Dispositif suivant la revendication 1 ou une des revendications précédentes, caractérisé en ce que les axes traversant les cylindres creux (18 à 21) sont à une extrémité pressés dans la plaque de retenue (30) correspondante.

5. Dispositif selon la revendication 1 ou une des revendications précédentes, caractérisé en ce que le guidage des chaînes à maillons forme dans le dispositif un brin de chaîne supérieur et un brin de chaîne inférieur constitué chaque fois de deux chaînes parallèles, chaque chaîne présentant au moins un pignon menant et un pignon de renvoi (5,6).

6. Dispositif selon la revendication 1 ou une des revendications précédentes, caractérisé en ce que le brin supérieur 2 de la paire de chaînes à maillons présente un guidage et support.

7. Dispositif selon la revendication 1 ou une des revendications précédentes, caractérisé en ce que le guidage et support du brin supérieur est réalisé sous forme d'une rainure dans une poutre support, ou de pignons dentés.

8. Dispositif selon la revendication 1 ou une des revendications précédentes, caractérisé en ce que le brin inférieur (4) du guidage de chaîne est écarté vers le bas ou vers le haut du plan horizontal de parcours, par au moins un tendeur de chaîne (8), et que les postes d'entrée et de sortie (9,10) sont constitués dans les lignes de jonction (12,15) du plan oblique du brin de chaîne inférieur avec chaque fois un dispositif de transport plan.
